(19) Europäisches Patentamt / European Patent Office / Office européen des brevets

(11) **EP 3 978 638 A1**

(12) **EUROPEAN PATENT APPLICATION**
published in accordance with Art. 153(4) EPC

(43) Date of publication:
**06.04.2022 Bulletin 2022/14**

(21) Application number: **20813624.2**

(22) Date of filing: **29.05.2020**

(51) International Patent Classification (IPC):
**C22C 5/06** (2006.01)    **C22C 32/00** (2006.01)
**C22C 1/04** (2006.01)

(52) Cooperative Patent Classification (CPC):
**C22C 1/04; C22C 5/06; C22C 32/00**

(86) International application number:
**PCT/JP2020/021427**

(87) International publication number:
**WO 2020/241854 (03.12.2020 Gazette 2020/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.05.2019 JP 2019102625**

(71) Applicant: **OMRON Corporation
Shiokoji-dori, Shimogyo-Ku
Kyoto-shi
Kyoto 600-8530 (JP)**

(72) Inventors:
• **TANAKA, Junichi
Kyoto-shi, Kyoto 600-8530 (JP)**
• **MISUMI, Shuichi
Kyoto-shi, Kyoto 600-8530 (JP)**
• **MORI, Tetsuya
Kyoto-shi, Kyoto 600-8530 (JP)**

(74) Representative: **HGF
HGF Limited
1 City Walk
Leeds LS11 9DX (GB)**

(54) **MATERIAL FOR CONTACT AND CONTAINING AG ALLOY AS MAIN COMPONENT, CONTACT USING SAID MATERIAL FOR CONTACT, AND ELECTRICAL DEVICE**

(57) A contact material reducing movement of oxides even when an arc is generated at the time of contact opening/closing to make the contacts less likely to be damaged is provided. A contact material mainly composed of an Ag alloy, includes: an Ag alloy; and at least one main additive existing as a phase different from the Ag alloy and selected from the group consisting of tin oxide, nickel, nickel oxide, iron, iron oxide, tungsten, tungsten carbide, tungsten oxide, zinc oxide, and carbon, wherein when a metal atom constituting the main additive or the main additive is carbon, the Ag alloy contains a solid solution element having a vacancy binding energy lower than a vacancy binding energy that is a binding energy between the metal atom included in the main additive and a vacancy in an Ag metal, or a binding energy between carbon included in the main additive of carbon and a vacancy in an Ag metal, in an amount of 0.01 wt.% or more.

Fig. 1

EP 3 978 638 A1

**Description**

BACKGROUND OF THE INVENTION

1. Field of the Invention

The present invention relates to a contact material mainly composed of an Ag alloy and a contact using the contact material. Particularly, the present invention relates to a contact material containing an Ag alloy and at least one main additive selected from the group consisting of tin oxide, nickel, nickel oxide, iron, iron oxide, tungsten, tungsten carbide, tungsten oxide, zinc oxide, and carbon, and a contact using the contact material.

2. Description of the Related Art

Contacts used in power relays and switches are made of a material mainly composed of Ag. In recent years, the Ag market price is about 2.5 times that of 20 years ago, and to save silver by reducing the amount of Ag used, compounding with inexpensive copper has been performed. To further save silver, it is necessary to make the contacts smaller.

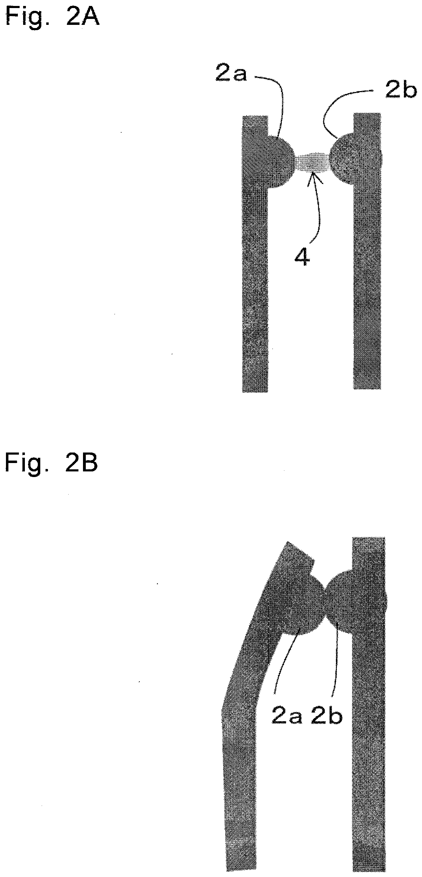

However, if current contacts are made smaller without change, the number of times of opening/closing until welding of contacts 2a, 2b due to an arc 4 generated at the time of opening/closing of the contacts is reduced, and the life is shortened (Figs. 2A and 2B).

On the other hand, to improve the welding resistance of electrical contacts using Ag, a material for electrical contacts is known in which an oxide such as tin oxide is dispersed in a matrix phase of Ag (see, e.g., Japanese Laid-Open Patent Publication No. 53-149667).

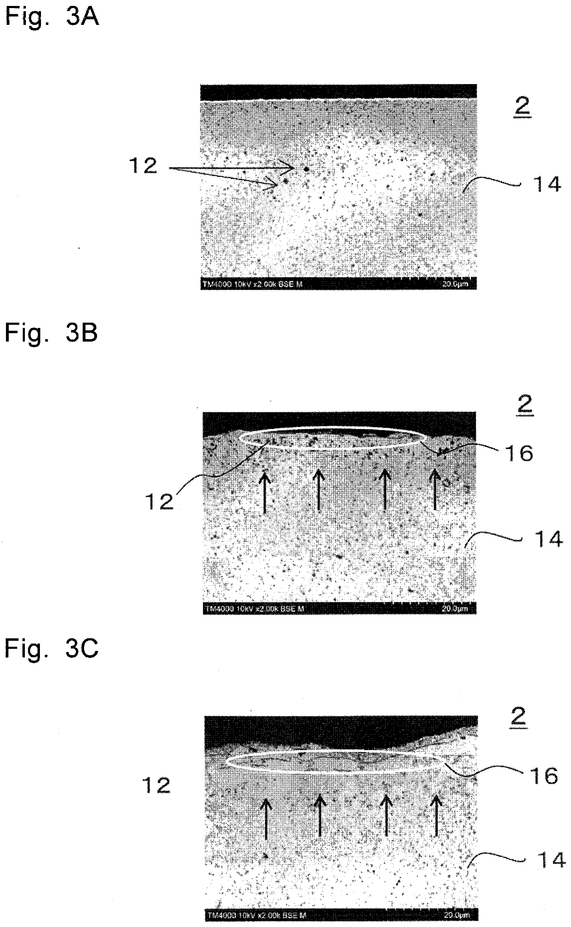

However, as the number of times of contact opening/closing increases, as shown in Figs. 3A to 3C, tin oxide 12 dispersed in a matrix phase 14 of an Ag alloy moves to a surface of a contact 2 due to an arc at the time of contact opening/closing and forms aggregates, causing a problem that contact damage is accelerated. Arrows in the drawings indicate a moving direction of tin oxide.

SUMMARY

It is therefore one non-limiting and exemplary embodiment provides a contact material reducing movement of oxides even when an arc is generated at the time of contact opening/closing to make the contacts less likely to be damaged.

In one general aspect, the techniques disclosed here feature: a contact material mainly composed of an Ag alloy, includes:

an Ag alloy; and
at least one main additive existing as a phase different from the Ag alloy and selected from the group consisting of tin oxide, nickel, nickel oxide, iron, iron oxide, tungsten, tungsten carbide, tungsten oxide, zinc oxide, and carbon, wherein when a metal atom constituting the main additive or the main additive is carbon, the Ag alloy contains a solid solution element having a vacancy binding energy lower than a vacancy binding energy that is a binding energy between the metal atom included in the main additive and a vacancy in an Ag metal or a binding energy between carbon included in the main additive of carbon and a vacancy in an Ag metal, in an amount of 0.01 wt.% or more.

The contact material mainly composed of Ag alloy according to the present invention contains a solid solution element lower than the vacancy binding energy of the constituent elements of the main additive in the Ag alloy. Therefore, even when the contact material is used for the contact, the movement of the main additive such as tin oxide due to an arc etc. generated at the time of contact opening/closing can be suppressed. As a result, the movement and aggregation of the main additive from inside the Ag alloy can be reduced, and the contact damage due to the arc generated at the time of contact opening/closing can be reduced.

BRIEF DESCRIPTION OF DRAWINGS

The present disclosure will become readily understood from the following description of non-limiting and exemplary embodiments thereof made with reference to the accompanying drawings, in which like parts are designated by like reference numeral and in which:

Fig. 1 is a bar graph comparing vacancy binding energy of rare earth elements among solid solution elements incorporated in solid solution with an Ag alloy of a contact material mainly composed of the Ag alloy according to the first embodiment with a vacancy binding energy of tin oxide (-0.202 eV);

Fig. 2A is a schematic showing how an arc is generated between contacts at the time of contact opening/closing;

Fig. 2B is a schematic showing a state in which contacts are welded together;

Fig. 3A is a schematic cross-sectional view showing how tin oxide is dispersed in silver of a matrix phase in the contacts;

Fig. 3B is a schematic cross-sectional view showing how tin oxide moves to the contact surface side and forms aggregates when the contacts are repeatedly opened/closed;

Fig. 3C is a schematic cross-sectional view showing how tin oxide moves toward the contact surface side and forms a larger aggregate when the contacts are further repeatedly opened/closed;

Fig. 4A is a schematic diagram showing a state of tin oxide and vacancies dispersed in Ag of the matrix phase in the contacts;

Fig. 4B is a schematic diagram showing how Sn atoms constituting tin oxide move to vacancies in Ag due to an arc at the time of opening/closing of the contacts;

Fig. 4C is a schematic diagram showing how the vacancies are formed in Ag and the Sn atoms move to the vacancies after Fig. 4B;

Fig. 4D is a schematic diagram showing how Sn atoms move due to repeated formation of vacancies in Ag and movement of Sn atoms to vacancies after Fig. 4C;

Fig. 5A is an image by a field emission scanning electron microscope (FE-SEM) of a cross section of a contact in which tin oxide $SnO_2$ is added as a main additive to Ag not substantially containing a solid solution element other than tin that is the main additive, according to Comparative Example 1, showing a state in which aggregates are formed near a contact surface due to repeated contact opening/closing and heating;

Fig. 5B is an image of an enlarged field of view of Fig. 5A by Electron BackScatter Diffraction (EBSD);

Fig. 6A is a field emission scanning electron microscope photograph (FE-SEM) of a cross section of a thin film before heat treatment for a thin film in which tin oxide $SnO_2$ is added as a main additive to an Ag alloy with a rare earth element added as a solid solution element to Ag that is a base material according to Example 1;

Fig. 6B is a diagram showing a binarized image of the image of the FE-SEM photograph of Fig. 6A;

Fig. 7A is a field emission scanning electron microscope photograph (FE-SEM) of a cross section of a thin film after heat treatment for the thin film in which tin oxide $SnO_2$ is added as a main additive to an Ag alloy with a rare earth element added as a solid solution element to Ag that is a base material according to Example 1;

Fig. 7B is a diagram showing a binarized image of the image of the FE-SEM photograph of Fig. 7A;

Fig. 8A is a field emission scanning electron microscope photograph (FE-SEM) of a cross section of a thin film before heat treatment for a thin film in which tin oxide $SnO_2$ is added as a main additive to Ag not substantially containing a solid solution element other than tin that is the main additive, according to Comparative Example 1;

Fig. 8B is a diagram showing a binarized image of the image of the FE-SEM photograph of Fig. 8A;

Fig. 9A is a field emission scanning electron microscope photograph (FE-SEM) of a cross section of a thin film after heat treatment for the thin film in which tin oxide $SnO_2$ is added as a main additive to Ag not substantially containing a solid solution element other than tin that is the main additive, according to Comparative Example 1;

Fig. 9B is a diagram showing a binarized image of the image of the FE-SEM photograph of Fig. 9A; and

Fig. 10 is a graph showing a relationship between a heat treatment temperature (annealing temperature) and a rate of change in sheet resistance of the thin films of Example 1 and Comparative Example 1.

DETAILED DESCRIPTION

<Background to the Present Invention>

As described above, even in a material for electrical contacts in which an oxide such as tin oxide is dispersed in a matrix phase of Ag to improve welding resistance, tin oxide moves to the surfaces of the contacts due to repeated opening/closing of the contacts, causing a problem of forming fine aggregates.

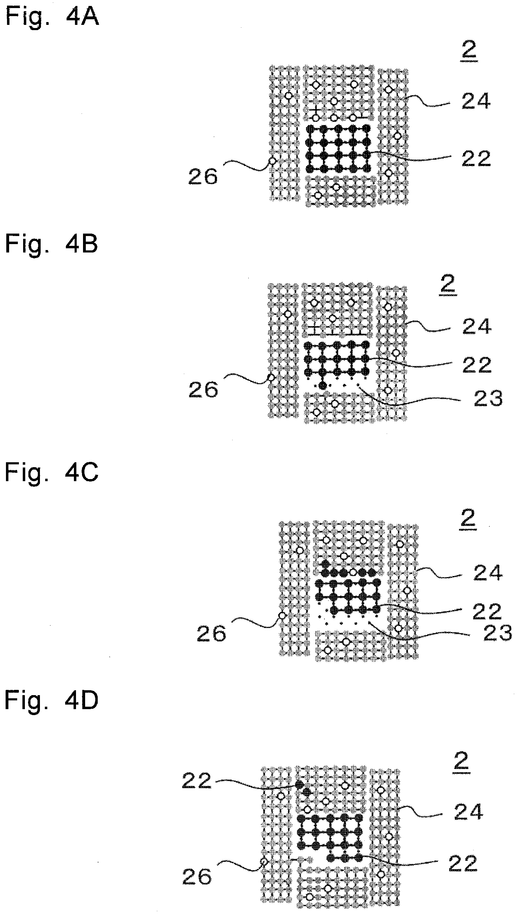

The present inventor examined a hypothesis of a movement mechanism in which vacancies are involved in the movement of tin oxide in Ag of a matrix phase. Fig. 4A is a schematic diagram showing states of Sn atoms 22, O atoms 23, and vacancies 26 of tin oxide dispersed in Ag 24 of a matrix phase in a contact 2. Fig. 4B is a schematic diagram showing how the Sn atoms 22 constituting tin oxide move to the vacancies 26 in the Ag 24 due to an arc at the time of opening/closing of the contacts. Fig. 4C is a schematic diagram showing how the vacancies 26 are formed in the Ag 24 and the Sn atoms 22 move to the vacancies after Fig. 4B. Fig. 4D is a schematic diagram showing how the Sn atoms move upward due to repeated formation of the vacancies 26 in the Ag 24 and movement of the Sn atoms 22 to the vacancies 26 after Fig. 4C.

The present inventor considers that the Sn atom constituting tin oxide moves near the surface of the contact due to the action of vacancy diffusion in Ag.

A vacancy binding energy $E_B$ is known as an energy related to vacancy. The vacancy binding energy is an energy change when the additive element substitution and the vacancy formation occur at the same time and adjacent to each other, as compared to when the additive element substitution and the vacancy formation occur independently. When the vacancy binding energy is low, the vacancies are difficult to move due to the effect of additives.

Therefore, the present inventors considered that movement of a constituent element of a main additive such as tin oxide can be suppressed by incorporating a solid solution element having the vacancy binding energy lower than the vacancy binding energy of the main additive into solid solution with an Ag alloy, thereby completing the present invention. Furthermore, the present inventors consider that since movement of a base material, i.e., silver, can be suppressed by incorporating a solid solution element having the vacancy binding energy lower than the vacancy binding energy of the main additive into solid solution with an Ag alloy, the coarsening of silver crystals can be prevented and contact damage can be suppressed, thereby completing the present invention.

The calculation method of the vacancy binding energy is described in, for example, Chun Yu, et al., "First principles calculation of the effects of solute atom on electromigration resistance of Al interconnects", J. Physics D:Appl. Phys. 42(2009) 125501(6pp).

Specifically, the vacancy binding energy $E_B$ can be calculated from Eq. (1). E (number of Ag atoms, number of vacancies, number of additive atoms) can be calculated based on the face-centered cubic lattice (FCC) of Ag with the numbers of additives and vacancies changed to remove the energy of Ag and the additive element itself. First-principles calculation software including commercial software such as WIEN2K, CASTEP, VASP (https://www.vasp.at/) and free software such as Abinit and Quantaum espresso can be used as calculation tools. By first-principles calculation, the spatial coordinates of atoms and the atomic number of each atom in a target system can be input to output the total energy in a state where the energy of the target system is minimized.

For structural optimization in the first-principles calculation, for example, the following steps are performed in order.

(a) A crystal structure of target base material atoms is set as a model shape.
(b) The total energy of the model shape is calculated by changing the atomic position and the electron density in the model shape.
(c) Step (b) is repeated until the model shape becomes stable.

For the model shape, the crystal structure of the base material, silver, is unified to a face-centered cubic lattice.

$$E_B=E(4,0,0)\times 8\text{-}E(31,0,1)\text{-}E(31,1,0)+E(30,1,1) \quad \ldots \text{Eq. (1)}$$

E(30,1,1): energy possessed by 30 Ag atoms, 1 vacancy, 1 additive atom
E(4,0,0): energy possessed by 4 Ag atoms
E(31,1,0): energy possessed by 31 Ag atoms and 1 vacancy
E(31,0,1): energy possessed by 31 Ag atoms and 1 additive atom

For E(30,1,1), E(31,0,1), and E(31,1,0), the initial crystal structure was the face-centered cubic lattice. The magnification of the lattice constant was 1, and the basic translation vector was unified to a=(8.1706 Å,0,0), b=(0,8.1706 Å,0), c=(0,0,8.1706 Å). The position of the vacancy was arranged to be closest to the position of the additive atom.

For E(4,0,0), the magnification of the lattice constant was 1, the basic translation vector was a=(4.085 Å,0,0), b=(0,4.085 Å,0), c=(0,0,4.085 Å).

The k-point mesh will be described. The k point in the first-principles calculation corresponds to the wave number of the wave function. The k-point mesh corresponds to the range of the wave number to be reflected in the calculation, and is set for each axis of the basic translation vectors a, b, c. When the k-point mesh is larger, the wave function with a larger wave number is taken into consideration, so that the calculation accuracy of the electron density is higher. On the other hand, the calculation required for the calculation becomes longer. The k-point mesh is set as the k-point in the reciprocal lattice space. In this description, the settings are as follows. For E(30,1,1), E(31,0,1), and E(31,1,0), the setting was 8x8x8. For E(4,0,0), the setting was $16\times 16\times 16$. The Monkhorst Pack method was used as the method of selecting k points. This Monkhorst Pack method is a general-purpose mesh generation method in first-principles calculation software.

Furthermore, the calculations will be described. In the structural optimization calculation, objects of optimization were (1) atomic position, (2) lattice shape, and (3) lattice constant. The Blocked-Davidson method was used as a technique for calculating an electronic state (orbit). The quasi-Newton method was used as a structural relaxation algorithm for atomic positions and ions. All of these are general-purpose techniques in first-principles calculation software. The convergence conditions of the structure optimization calculation are that the energy difference before and after the iterative calculation satisfies $10^{-4}$ eV/cell or less, and that the magnitude of the force generated per atom is $10^{-6}$ eV/Å or less. In this case, a cell corresponds to the model shape.

A contact material mainly composed of an Ag alloy according to a first aspect, includes:

an Ag alloy; and

At least one main additive existing as a phase different from the Ag alloy and selected from the group consisting of tin oxide, nickel, nickel oxide, iron, iron oxide, tungsten, tungsten carbide, tungsten oxide, zinc oxide, and carbon, wherein when a metal atom constituting the main additive or the main additive is carbon, the Ag alloy contains a solid solution element having a vacancy binding energy lower than a binding energy between the metal atom included in the main additive and a vacancy in an Ag metal, or a binding energy between carbon included in the main additive of carbon and a vacancy in an Ag metal, in an amount of 0.01 wt.% or more.

Further, as a contact material mainly composed of an Ag alloy according to a second aspect, in the first aspect, wherein the main additive may be tin oxide, and may be contained in an amount of 5 wt.% or more and 20 wt.% or less in terms of metal, and

wherein the solid solution element may be at least one selected from the group consisting of Be, C, P, K, Ca, Se, Rb, Sr, Sb, Te, Ba, La, Ce, Pr, Nd, Pm, Sm, Eu, Tl, Pb, and Bi, and may be contained in an amount of 0.01 wt.% or more and 2 wt.%.

Further, as a contact material mainly composed of an Ag alloy according to a third aspect, in the first aspect, wherein in the case of nickel or nickel oxide, the main additive may be contained in an amount of 5 wt.% or more and 20 wt.% or less in terms of metal, and

wherein the solid solution element may be at least one selected from the group consisting of Li, Be, C, Na, Mg, Al, Si, P, K, Ca, Cu, Zn, Ga, Ge, Se, Rb, Sr, Y, In, Sn, Sb, Te, Ba, La, Ce, Pr, Nd, Pm, Sm, Eu, Gd, Tb, Dy, Ho, Er, Tm, Yb, Lu, Tl, Pb, and Bi, and may be contained in an amount of 0.01 wt.% or more and 2 wt.% or less.

Further, as a contact material mainly composed of an Ag alloy according to a fourth aspect, in the first aspect, wherein the main additive may be iron or iron oxide, and may be contained in an amount of 5 wt.% or more and 20 wt.% or less in terms of metal, and

wherein the solid solution element may be at least one selected from the group consisting of Li, Be, C, Na, Mg, Al, Si, P, K, Ca, Sc, Ti, Co, Ni, Cu, Zn, Ga, Ge, Se, Rb, Sr, Y, Zr, Rh, Pd, In, Sn, Sb, Te, Ba, La, Ce, Pr, Nd, Pm, Sm, Eu, Gd, Tb, Dy, Ho, Er, Tm, Yb, Lu, Hf, Ir, Pt, Tl, Pb, and Bi, and may be contained in an amount of 0.01 wt.% or more and 2 wt.% or less.

Further, as a contact material mainly composed of an Ag alloy according to a fifth aspect, in the first aspect, wherein the main additive may be at least one selected from the group consisting of tungsten, tungsten carbide, and tungsten oxide, and may be contained in an amount of 5 wt.% or more and 20 wt.% or less in terms of metal, and

wherein the solid solution elements may be at least one selected from the group consisting of Li, Be, C, Na, Mg, Al, Si, P, K, Ca, Sc, Ti, V, Cr, Mn, Fe, Co, Ni, Cu, Zn, Ga, Ge, Se, Rb, Sr, Y, Zr, Ru, Rh, Pd, In, Sn, Sb, Te, Ba, La, Ce, Pr, Nd, Pm, Sm, Eu, Gd, Tb, Dy, Ho, Er, Tm, Yb, Lu, Hf, Ta, Ir, Pt, Tl, Pb, and Bi, and may be contained in an amount of 0.01 wt.% or more and 2 wt.% or less.

Further, as a contact material mainly composed of an Ag alloy according to a sixth aspect, in the first aspect, wherein the main additive may be zinc oxide, and may be contained in an amount of 5 wt.% or more and 20 wt.% or less in terms of metal, and

wherein the solid solution elements may be at least one selected from the group consisting of Be, C, Na, Si, P, K, Ca, Ga, Ge, Se, Rb, Sr, Y, In, Sn, Sb, Te, Ba, La, Ce, Pr, Nd, Pm, Sm, Eu, Gd, Tb, Dy, Yb, Tl, Pb, and Bi, and may be contained in an amount of 0.01 wt.% or more and 2 wt.% or less.

Further, as a contact material mainly composed of an Ag alloy according to a seventh aspect, in the first aspect, wherein the main additive may be carbon, and may be contained in an amount of 0.01 wt.% or more and 2 wt.% or less in terms of elements, and

wherein the solid solution element may be selected from the group consisting of Be, K, Ca, Se, Rb, Sr, Sb, Te, Ba, La, Ce, Pr, Nd, Pm, Eu, Pb, and Bi, and may be contained in an amount of 0.01 wt.% or more and 2 wt.% or less.

Further, as a contact material mainly composed of an Ag alloy according to an eighth aspect, in any one of the second aspect to the fourth aspect and the sixth aspect to the seventh aspect, wherein at least one selected from the group consisting of tungsten, tungsten carbide, tungsten oxide, and zirconia and existing as a phase different from the Ag alloy may be further contained in an amount of 0.1 wt.% or more and 5 wt.% or less in terms of metal.

Further, as a contact material mainly composed of an Ag alloy according to a ninth aspect, in any one of the first aspect to the seventh aspect, wherein at least one of molybdenum oxide and tellurium dioxide existing as a phase different from the Ag alloy may be further contained in an amount of 0.1 wt.% or more and 5 wt.% or less in terms of metal.

Further, as a contact material mainly composed of an Ag alloy according to a tenth aspect, in any one of the first aspect to the seventh aspect, wherein at least one of lithium oxide, lithium carbonate, and lithium cobalt oxide existing as a phase different from the Ag alloy may be further contained in an amount of 0.01 wt.% or more and 1 wt.% or less in terms of metal.

Further, as a contact material mainly composed of an Ag alloy according to an eleventh aspect, in any one of the first aspect to the seventh aspect, wherein at least one of copper oxide and copper existing as a phase different from the Ag alloy may be further contained in an amount of 0.1 wt.% or more and 2 wt.% or less in terms of metal.

Further, as a contact material mainly composed of an Ag alloy according to a twelfth aspect, in any one of the second aspect and the fourth aspect to the seventh aspect, wherein at least one of nickel oxide and nickel existing as a phase different from the Ag alloy may be further contained in an amount of 0.1 wt.% or more and 2 wt.% or less in terms of metal.

Further, as a contact material mainly composed of an Ag alloy according to a thirteenth aspect, in any one of the first aspect to the seventh aspect, wherein indium oxide existing as a phase different from the Ag alloy may be further contained in an amount of 0.1 wt.% or more and 5 wt.% or less in terms of metal.

Further, as a contact material mainly composed of an Ag alloy according to a fourteenth aspect, in any one of the first aspect to the seventh aspect, wherein bismuth oxide existing as a phase different from the Ag alloy may be further contained in an amount of 0.1 wt.% or more and 5 wt.% or less in terms of metal.

Further, as a contact material mainly composed of an Ag alloy according to a fifteenth aspect, in any one of the third aspect to the seventh aspect, wherein tin oxide existing as a phase different from the Ag alloy may be further contained in an amount of 0.1 wt.% or more and 5 wt.% or less in terms of metal.

Further, as a contact material mainly composed of an Ag alloy according to a sixteenth aspect, in any one of the second aspect to the fifth aspect and the seventh aspect, wherein at least zinc oxide existing as a phase different from the Ag alloy may be further contained in an amount of 0.1 wt.% or more and 5 wt.% or less in terms of metal.

Further, as a contact material mainly composed of an Ag alloy according to a seventeenth aspect, in any one of the second aspect to the sixth aspect, wherein carbon existing as a phase different from the Ag alloy may be further contained in an amount of 0.01 wt.% or more and 2 wt.% or less in terms of elements.

Further, as a contact material mainly composed of an Ag alloy according to a eighteenth aspect, in the first aspect, wherein at least one selected from the group consisting of tungsten, tungsten carbide, tungsten oxide, zirconia, molybdenum oxide, tellurium dioxide, lithium oxide, lithium carbonate, lithium cobalt oxide, copper oxide, copper, nickel oxide, nickel, indium oxide, bismuth oxide, tin oxide, zinc oxide, and carbon existing as a phase different from the Ag alloy may be further contained.

Further, as a contact according to a nineteenth aspect uses the contact material mainly composed of an Ag alloy according to any one of the first aspect to the eighteenth aspect.

Further, as an electrical device selected from a group consisting of relays, magnetic contactors, electromagnetic switches, electrical relays, and switches uses the contact according to the nineteenth aspect.

The contact material mainly composed of an Ag alloy and the contact using the contact material according to an embodiment will now be described with reference to the accompanying drawings. In the drawings, substantially the same members are denoted by the same reference numerals.

(First Embodiment)

<Contact Material Mainly Composed of Ag Alloy>

The contact material mainly composed of an Ag alloy according to a first embodiment contains an Ag alloy and a main additive existing as a phase different from the Ag alloy. The main additive is at least one selected from the group consisting of tin oxide, nickel, nickel oxide, iron, iron oxide, tungsten, tungsten carbide, tungsten oxide, zinc oxide, and carbon. The Ag alloy contains a solid solution element in an amount of 0.01 wt.% or more. When a metal atom constituting the main additive or the main additive is carbon, the solid solution element has a vacancy binding energy lower than the vacancy binding energy that is a binding energy between the metal atom included in the main additive and a vacancy in an Ag metal or a binding energy between carbon included in the main additive of carbon and a vacancy in an Ag metal.

According to this contact material mainly composed of an Ag alloy, the Ag alloy contains a solid solution element lower than the vacancy binding energy of the constituent element of the main additive. Therefore, when the contact material is used for contacts, the movement of the main additive such as tin oxide to the contact surface due to the arc etc. generated at the time of contact opening/closing can be suppressed. As a result, the main additive can be prevented from moving from the inside of the Ag alloy and agglutinating on the contact surface, and a contact damage due to an arc generated at the time of contact opening/closing can be suppressed.

This contact material mainly composed of the Ag alloy may contain an Ag alloy of a main phase and a main additive existing as a phase different from the Ag alloy of the main phase, and the form thereof may be any of a molded body having a constant shape, an amorphous sintered body, an amorphous mixed powder not forming a constant shape, etc.

Members constituting this contact material mainly composed of the Ag alloy will be described.

<Ag Alloy>

The Ag alloy constitutes a main component of the contact material. The solid solution element incorporated in solid solution with the Ag alloy is contained in Ag in an amount of 0.01 wt.% or more. When a metal atom constituting the main additive or the main additive is carbon, the Ag alloy contains the solid solution element having a vacancy binding energy lower than the vacancy binding energy that is a binding energy between the metal atom included in the main additive and a vacancy in an Ag metal or a binding energy between carbon included in the main additive of carbon and a vacancy in an Ag metal, in an amount of 0.01 wt.% or more. Since the at least 0.01 wt.% solid solution element is contained, the solid solution element is more likely to bond with the vacancies in the Ag alloy than the elements constituting the main additive, so that the vacancies are attracted around the solid solution element. As a result, the movement and aggregation of the main additive can be suppressed. The solid solution element may preferably be contained in an amount of 1.5 times or less of the solid solution limit of the Ag single phase.

Table 1 shows the elements that may be used as the solid solution element and the vacancy binding energy of the elements in Ag.

[Table 1]

| Elements | Vacancy Binding Energy (eV) | Elements | Vacancy Binding Energy (eV) | Elements | Vacancy Binding Energy (eV) |
|---|---|---|---|---|---|
| Li | -0.087 | Zn | -0.113 | Nd | -0.293 |
| Be | -0.237 | Ga | -0.130 | Pm | -0.247 |
| C | -0.235 | Ge | -0.177 | Sm | -0.217 |
| Na | -0.186 | Se | -0.259 | Eu | -0.285 |
| Mg | -0.061 | Rb | -0.873 | Gd | -0.157 |
| Al | -0.077 | Sr | -0.538 | Tb | -0.137 |
| Si | -0.185 | Y | -0.124 | Dy | -0.116 |
| P | -0.222 | Zr | 0.036 | Ho | -0.099 |
| K | -0.592 | Ru | 0.150 | Er | -0.083 |
| Ca | -0.252 | Rh | 0.065 | Tm | -0.068 |
| Sc | 0.010 | Pd | -0.013 | Yb | -0.165 |
| Ti | 0.053 | In | -0.136 | Lu | -0.046 |
| V | 0.074 | Sn | -0.202 | Hf | 0.056 |
| Cr | 0.094 | Sb | -0.255 | Ta | 0.102 |
| Mn | 0.084 | Te | -0.301 | Ir | 0.071 |
| Fe | 0.073 | Ba | -1.010 | Pt | -0.021 |
| Co | 0.027 | La | -0.461 | Tl | -0.213 |
| Ni | -0.030 | Ce | -0.367 | Pb | -0.242 |
| Cu | -0.096 | Pr | -0.339 | Bi | -0.285 |
| W | 0.156 | Mo | 0.162 | | |

The relationship between the main additive and the solid solution element will be described later.

<Main Additive>

The main additive exists as a phase different from the Ag alloy. The main additive is at least one selected from the group consisting of tin oxide, nickel, nickel oxide, iron, iron oxide, tungsten, tungsten carbide, tungsten oxide, zinc oxide, and carbon. For tin oxide, nickel oxide, iron oxide, and tungsten oxide, indefinite specific oxides thereof may be selected as the main additive.

<Tin Oxide SnO$_2$>

When the main additive is tin oxide, the content is 5 wt.% or more and 20 wt.% or less in terms of metal. In this case, the vacancy binding energy of the metal element Sn constituting tin oxide in Ag is -0.202 eV.

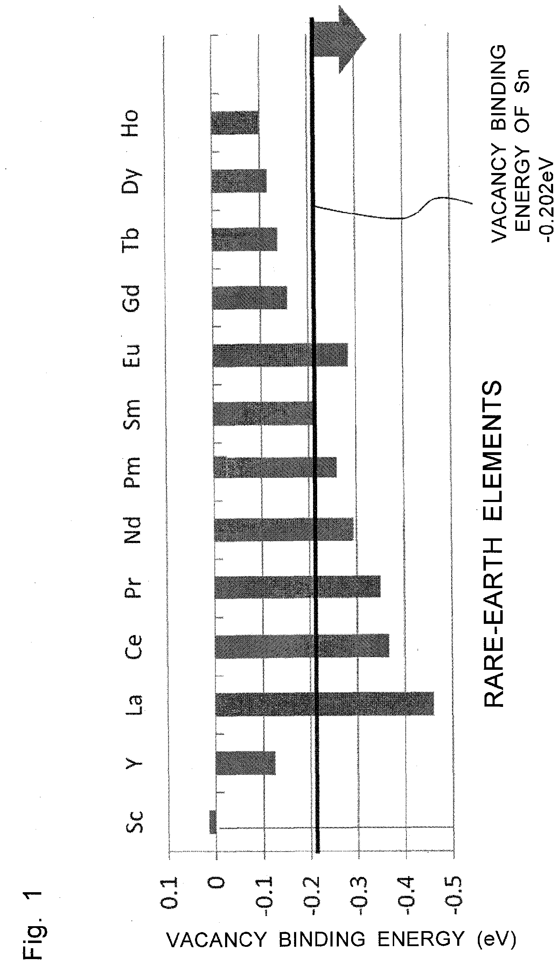

Fig. 1 is a bar graph comparing vacancy binding energy of rare earth elements among solid solution elements incorporated in solid solution with the Ag alloy of the contact material mainly composed of the Ag alloy according to the first embodiment with the vacancy binding energy of tin oxide (-0.202 eV).

As shown in Fig. 1, it can be seen that when tin oxide is used as the main additive, La, Ce, Pr, Nd, Pm, Sm, and Eu among the rare earth elements including scandium Sc and yttrium Y have a vacancy binding energy lower than the vacancy binding energy of tin oxide. Therefore, La, Ce, Pr, Nd, Pm, Sm, and Eu can be used as the solid solution element.

Furthermore, the solid solution element is not limited to the rare earth elements and is at least one selected from the group consisting of Be, C, P, K, Ca, Se, Rb, Sr, Sb, Te, Ba, La, Ce, Pr, Nd, Pm, Sm, Eu, Tl, Pb, and Bi having a vacancy binding energy lower than the vacancy binding energy of Sn in Ag, and the content is 0.01 wt.% or more and 2 wt.% or less.

<Nickel Ni or Nickel Oxide NiO>

When the main additive is nickel or nickel oxide, the content is 5 wt.% or more and 20 wt.% or less in terms of metal. In this case, the vacancy binding energy of the metal element Ni constituting nickel or nickel oxide in Ag is -0.030 eV. Therefore, the solid solution element is at least one selected from the group consisting of Li, Be, C, Na, Mg, Al, Si, P, K, Ca, Cu, Zn, Ga, Ge, Se, Rb, Sr, Y, In, Sn, Sb, Te, Ba, La, Ce, Pr, Nd, Pm, Sm, Eu, Gd, Tb, Dy, Ho, Er, Tm, Yb, Lu, Tl, Pb, and Bi having a vacancy binding energy lower than the vacancy binding energy of Ni in Ag, and the content is 0.01 wt.% or more and 2 wt.% or less.

<Iron Fe or Iron Oxides $\alpha$-Fe$_2$O$_3$, $\gamma$-Fe$_2$O$_3$, Fe$_3$O$_4$>

When the main additive is iron or iron oxide, the content is 5 wt.% or more and 20 wt.% or less in terms of metal. In this case, the vacancy binding energy of the metal element Fe in Ag constituting iron or iron oxide is 0.073 eV. Therefore, the solid solution element is at least one selected from the group consisting of Li, Be, C, Na, Mg, Al, Si, P, K, Ca, Sc, Ti, Co, Ni, Cu, Zn, Ga, Ge, Se, Rb, Sr, Y, Zr, Rh, Pd, In, Sn, Sb, Te, Ba, La, Ce, Pr, Nd, Pm, Sm, Eu, Gd, Tb, Dy, Ho, Er, Tm, Yb, Lu, Hf, Ir, Pt, Tl, Pb, and Bi having a vacancy binding energy lower than the vacancy binding energy of Fe in Ag, and the content is 0.01 wt.% or more and 2 wt.% or less.

<Tungsten W, Tungsten Carbide WC, Tungsten Oxides W$_2$O$_3$, WO$_2$, WO$_3$>

When the main additive is at least one selected from the group consisting of tungsten, tungsten carbide, and tungsten oxide, the content is 5 wt.% or more and 20 wt.% or less in terms of metal. In this case, the vacancy binding energy of the metal element W constituting tungsten, tungsten carbide, and tungsten oxide in Ag is 0.156 eV. Therefore, the solid solution element is at least one selected from the group consisting of Li, Be, C, Na, Mg, Al, Si, P, K, Ca, Sc, Ti, V, Cr, Mn, Fe, Co, Ni, Cu, Zn, Ga, Ge, Se, Rb, Sr, Y, Zr, Ru, Rh, Pd, In, Sn, Sb, Te, Ba, La, Ce, Pr, Nd, Pm, Sm, Eu, Gd, Tb, Dy, Ho, Er, Tm, Yb, Lu, Hf, Ta, Ir, Pt, Tl, Pb, and Bi having a vacancy binding energy lower than the vacancy binding energy of W in Ag, and the content is 0.01 wt.% or more and 2 wt.% or less.

<Zinc Oxide ZnO>

When the main additive is zinc oxide, the content is 5 wt.% or more and 20 wt.% or less in terms of metal. In this case, the vacancy binding energy of the metal element Zn constituting zinc oxide in Ag is -0.113 eV. Therefore, the solid solution element is at least one selected from the group consisting of Be, C, Na, Si, P, K, Ca, Ga, Ge, Se, Rb, Sr, Y, In, Sn, Sb, Te, Ba, La, Ce, Pr, Nd, Pm, Sm, Eu, Gd, Tb, Dy, Yb, Tl, Pb, and Bi having a vacancy binding energy lower than the vacancy binding energy of Zn in Ag, and the content is 0.01 wt.% or more and 2 wt.% or less.

<Carbon C>

When the main additive is carbon, the content is 0.01 wt.% or more and 2 wt.% or less in terms of elements. The carbon may be any carbon and may be an allotrope such as graphite, graphene, fullerene, and carbon nanotube.

In this case, the vacancy binding energy of carbon in Ag is -0.235 eV. Therefore, the solid solution element is selected from the group consisting of Be, K, Ca, Se, Rb, Sr, Sb, Te, Ba, La, Ce, Pr, Nd, Pm, Eu, Pb, and Bi having a vacancy binding energy lower than the vacancy binding energy of carbon in Ag and the content is 0.01 wt.% or more and 2 wt.% or less.

<Secondary Additive>

As with the main additive, a secondary additive exists as a phase different from the Ag alloy. The secondary additive will hereinafter be described.

<Tungsten W, Tungsten Carbide WC, Tungsten Oxides $W_2O_3$, $WO_2$, $WO_3$, and Zirconia $ZrO_2$>

The secondary additive may be at least one of tungsten, tungsten carbide, tungsten oxide, and zirconia. In this case, the content may be 0.1 wt.% or more and 5 wt.% or less in terms of metal. Tungsten, tungsten carbide, and tungsten oxide are added as the secondary additive when the main additive is not tungsten, tungsten carbide, or tungsten oxide. Tungsten, tungsten carbide, tungsten oxide, and zirconia have high melting points, and the addition thereof provides the effect of making the main additive difficult to move.

<Molybdenum Oxide $MoO_3$, Tellurium Dioxide $TeO_2$>

The secondary additive may be at least one of molybdenum oxide and tellurium dioxide. In this case, the content may be 0.1 wt.% or more and 5 wt.% or less in terms of metal. Since molybdenum oxide and tellurium dioxide have a sublimation point or a boiling point lower than that of Ag, formation of unevenness can be suppressed by an ablation effect, and the welding resistance can be improved.

<Lithium Oxide $Li_2O$, Lithium Carbonate $Li_2CO_3$, Lithium Cobalt Oxide $LiCoO_2$>

The secondary additive may be at least one of lithium oxide, lithium carbonate, and lithium cobalt oxide. In this case, the content may be 0.01 wt.% or more and 1 wt.% or less in terms of metal. By containing lithium oxide, lithium carbonate, and lithium cobalt oxide, wear resistance can be improved.

<Copper Oxide CuO, Copper Cu>

The secondary additive may be at least one of copper oxide and copper. In this case, the content may be 0.1 wt.% or more and 2 wt.% or less in terms of metal. By containing copper oxide or copper, processability can be improved.

<Nickel Oxide NiO, Nickel Ni>

The secondary additive may be at least one of nickel oxide and nickel. In this case, the content may be 0.1 wt.% or more and 2 wt.% or less in terms of metal. Nickel oxide and nickel are added as the secondary additives when the main additive is not nickel oxide or nickel. By containing nickel oxide and nickel, Processability can be improved.

<Indium Oxide $In_2O_3$>

The secondary additive may be indium oxide. In this case, the content may be 0.1 wt.% or more and 5 wt.% or less in terms of metal. By adding indium oxide, wear resistance can be improved, and low contact resistance can be achieved.

<Bismuth Oxide $Bi_2O_3$>

The secondary additive may be bismuth oxide. In this case, the content may be 0.1 wt.% or more and 5 wt.% or less in terms of metal. By adding bismuth oxide, welding resistance can be improved, and low contact resistance can be achieved.

<Tin Oxide $SnO_2$>

The secondary additive may be tin oxide. In this case, the content may be 0.1 wt.% or more and 5 wt.% or less in terms of metal. Tin oxide is added as the secondary additive when the main additive is not tin oxide. By adding tin oxide, welding resistance can be improved.

<Zinc Oxide ZnO>

The secondary additive may be zinc oxide. In this case, the content may be 0.1 wt.% or more and 5 wt.% or less in terms of metal. Zinc oxide is added as the secondary additive when the main additive is not zinc oxide. By adding zinc oxide, welding resistance can be improved, and low contact resistance can be achieved.

<Carbon C>

The secondary additive may be carbon. In this case, the content may be 0.01 wt.% or more and 2 wt.% or less in terms of elements. The carbon may be any carbon and may be an allotrope such as graphite, graphene, fullerene, and carbon nanotube. The carbon is added as the secondary additive when the main additive is not carbon. By adding carbon, welding resistance can be improved, and low contact resistance can be achieved.
a plurality of the secondary additives described above may be selected and used.

<Method of Manufacturing Contact Using Contact Material Mainly Composed of Ag Alloy>

A method of manufacturing a contact using the contact material mainly composed of the Ag alloy according to the first embodiment includes:

a particle manufacturing step of manufacturing an Ag alloy particle powder for the matrix phase, a main additive particle powder, and a secondary additive particle powder;
a mixing step of mixing the Ag alloy particle powder, the main additive particle powder, and the secondary additive particle powder to obtain a mixed powder; and
a sintering step of sintering the mixed powder.

After the sintering step, for example, a molding step of molding into a predetermined shape for a contact may be included. Therefore, the steps not including the molding step for a contact are also steps constituting a method of manufacturing a contact material mainly composed of an Ag alloy. The steps are merely examples, and the present invention is not limited thereto. Any commonly used powder metallurgy method can be used.

<Particle Manufacturing Step>

The particle manufacturing step may be performed, for example, by weighing Ag and the solid solution element as raw materials and dissolving and then finely graining the raw materials. Classification may be performed as needed. The particle manufacturing step may be performed by a gas atomizing method, a water atomizing method, a PVD method, a CVD method etc. The fine graining may be performed by plasma processing or pulverization from an alloy. Incorporation of the solid solution element into solid solution with Ag is not essential in this particle manufacturing step. For example, the Ag particle powder and the solid solution element particle powder may separately be prepared. In this case, the solid solution element is not incorporated in solid solution with Ag. In the next mixing step, the particles may be mixed, and the solid solution element may be incorporated in solid solution with Ag in the mixing step or the sintering step for alloying. Alternatively, the Ag particle powder and the oxide particle powder may be mixed and then reduced in an intermediate step for alloying.

<Mixing Step>

In the mixing step, the Ag alloy particle powder, the main additive particle powder, and the secondary additive particle powder are mixed to obtain a mixed powder. For example, the powders may be mixed in a mortar. Alternatively, the powders may be mixed in a ball mill.
This mixing step provides a mixed powder in which the main additive particles and the secondary additive particles are dispersed in the matrix phase of the Ag alloy particle powder.
The present invention is not limited to the method described above and, for example, after manufacturing an alloy of Ag and an element constituting the main additive in advance, the alloy can be treated by an atomizing method to internally oxidize only the element constituting the main additive, for example, Sn, selectively so as to obtain a mixed powder in which $SnO_2$ particles are dispersed in Ag. Alternatively, after manufacturing an alloy of Ag and the elements constituting the main additive in advance, an internal oxidation treatment may be performed by a high temperature treatment in an oxygen atmosphere. The Ag alloy according to the first embodiment may be mixed with the particles obtained by this method to obtain the alloy of the present invention.

<Sintering Step>

In the sintering step, for example, the mixed powder may be press-molded at room temperature to form a powder molded body, and the powder molded body may then be sintered in a vacuum sintering furnace. In a vacuum sintering furnace, evacuation is performed, the temperature is raised to, for example, 800 °C, and the temperature is kept for about 30 minutes for sintering.

Alternatively, after the internal oxidation treatment, compression molding may be performed and followed by a high temperature treatment at 750 °C to 900 °C in the atmosphere.

This sintering step can provide a mixed powder in which the main additive particles and the secondary additive particles are dispersed in the matrix phase of the Ag alloy particle powder.

The steps of the manufacturing method may be performed in an inert atmosphere such as nitrogen or argon. This can suppress the oxidation of the elements constituting the contacts. Furthermore, the steps may be performed in a reducing atmosphere such as hydrogen.

The sintering step is not limited to one step. For example, sintering and compression molding may be repeated, or after sintering, pulverization is performed, and pressing and sintering may be repeated.

<Molding Step>

In the molding step, molding into a predetermined shape of a contact is performed. For example, after a rod shape is formed by hot extrusion, a contact shape can be formed by rolling and punching or wire drawing and heading. At the time of rolling and header processing, compounding with copper may be performed, or barrel polishing and washing may be performed after forming the contact shape. The shape of the contact may be a rivet contact for caulking with a contact piece, a wire impress contact cut to a desired size and crimped in a drawn wire state, or a vertical welded contact attached to a contact piece by welding, a tape impress contact processed into square tape and cut to a desired dimension and crimped, a tape contact having a projection on the contact piece side and attached by resistance welding to the contact piece, a back brazing contact further having a brazing agent on the underside of the projection, and a contact acquired by processing a drawn wire, a square tape, or a plate into individual pieces by cutting or punching into a round or square shape and attached to a contact piece with silver brazing, etc.; however, the present invention is not limited thereto.

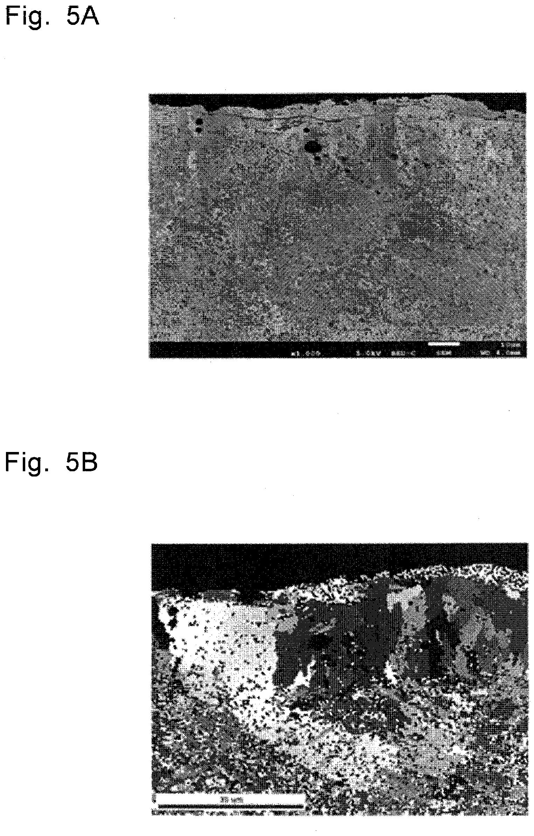

Fig. 5A is an FE-SEM photograph of a cross section of a contact in which tin oxide $SnO_2$ is added as a main additive to Ag not substantially containing a solid solution element other than tin that is the main additive, showing a state in which aggregates are formed near a contact surface due to repeated contact opening/closing and heating. Fig. 5B is an EBSD photograph with a field of view similar to that of Fig. 5A.

As shown in Fig. 5A, in the contact containing Ag containing no solid solution element and tin oxide $SnO_2$ as the main additive, it can be seen that a large number of aggregates of several $\mu$m or more are formed near the surface after Sn moves to the contact surface.

To verify the effect of the invention, coarsening of crystals due to heating was compared between thin films shown in (Example 1) and (Comparative Example 1).

(Example 1)

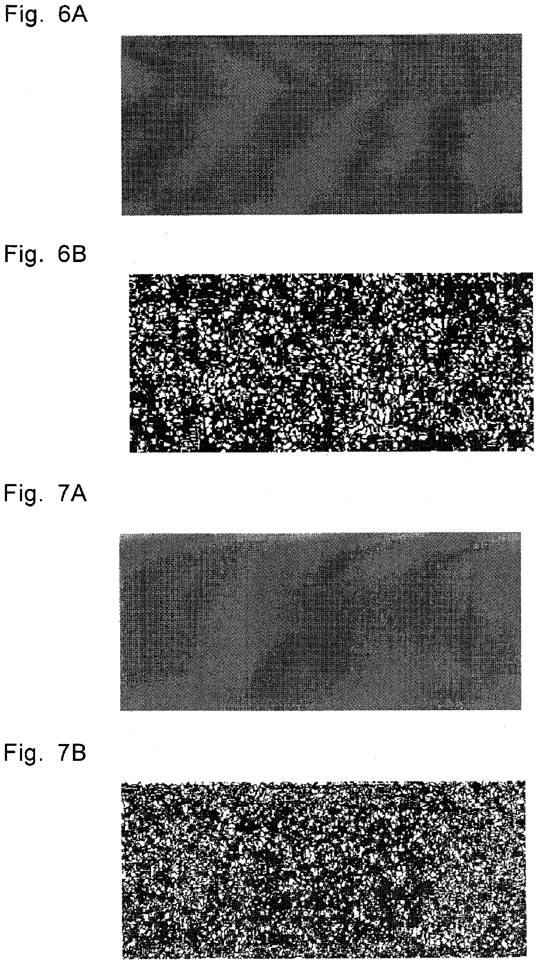

Fig. 6A is a field emission scanning electron microscope photograph (FE-SEM) of a cross section of a thin film before heat treatment for a thin film in which tin oxide $SnO_2$ is added as a main additive to an Ag alloy with a rare earth element added as a solid solution element to Ag that is a base material according to Example 1. Fig. 7A is a field emission scanning electron microscope photograph (FE-SEM) of a cross section of a thin film after heat treatment for the thin film according to Example 1. The heat treatment was performed at 600 °C under vacuum for 10 minutes.

The crystal size of Ag serving as the base material is calculated as an average crystal size from the number of times of occurrence of a peak of luminance corresponding to a central portion of a crystal obtained by measuring the luminance of a width of 890 nm at a position of a thickness of 250 nm by using the images of the cross section of the thin film of Figs 6A and 7A. Since the particles are hardly recognized as they are in the FE-SEM photographs of Figs. 6A and 7A, binarization was performed as an image process as shown in Figs. 6B and 7B so that the distribution of the particles is easily understood.

As shown in Figs. 6A and 6B, in the thin film before the heat treatment, the crystal size of Ag serving as the base material was about 28 nm on average. On the other hand, as shown in Figs. 7A and 7B, the crystal size of Ag serving as the base material was about 30 nm on average after the heat treatment at 600 °C for 10 minutes. According to the thin film containing the Ag alloy in which the rare earth element is incorporated in solid solution and the tin oxide $SnO_2$ as the main additive according to Example 1, a change in particle diameter before and after the heat treatment was 1.07 times, which was not a large change.

(Comparative Example 1)

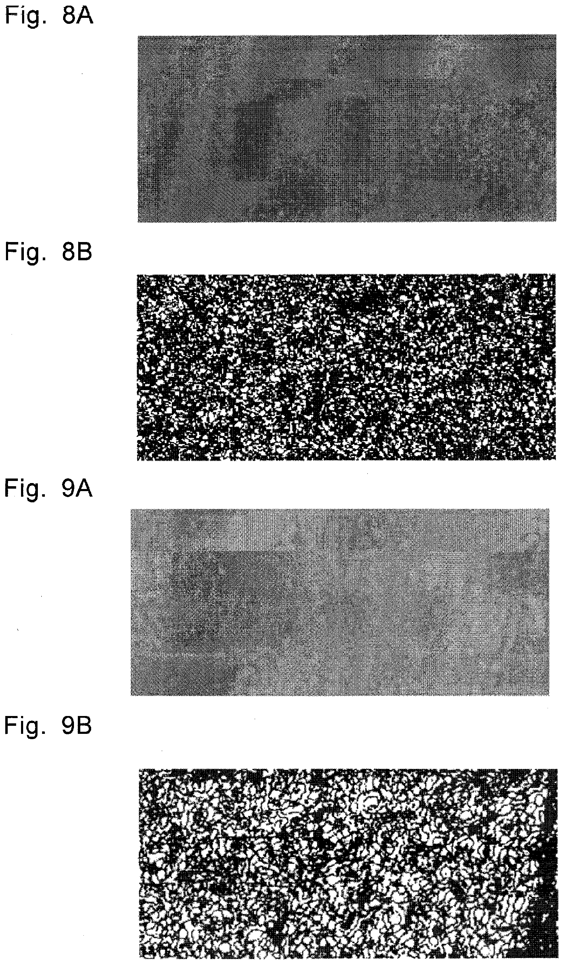

Fig. 8A is a field emission scanning electron microscope photograph (FE-SEM) of a cross section of a thin film before heat treatment for a thin film in which tin oxide $SnO_2$ is added as a main additive to Ag not substantially containing a solid solution element other than tin that is the main additive, according to Comparative Example 1. Fig. 9A is a field emission scanning electron microscope photograph (FE-SEM) of a cross section of a thin film after heat treatment for the thin film according to Comparative Example 1. The heat treatment was performed at 600 °C under vacuum for 10 minutes in the same manner as in (Example 1). Fig. 8B is a diagram showing a binarized image of the image of the FE-SEM photograph of Fig. 8A. Fig. 9B is a diagram showing a binarized image of the image of the FE-SEM photograph of Fig. 9A.

As shown in Fig. 8A, in the thin film before the heat treatment, the crystal size of Ag serving as the base material was about 36 nm on average. On the other hand, as shown in Fig. 9A, after the heat treatment at 600 °C for 10 minutes, the crystal size of Ag serving as the base material was about 47 nm on average. It was found that in the thin film containing Ag containing no solid solution element and tin oxide $SnO_2$ as the main additive according to Comparative Example 1, the particles were coarsened by about 1.3 times in particle diameter before and after the heat treatment.

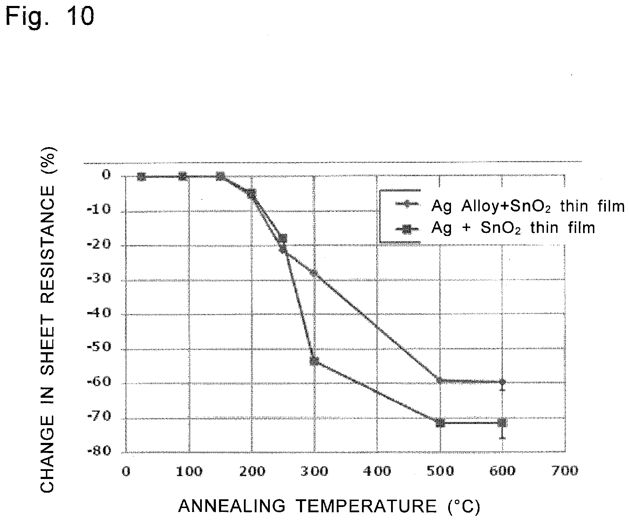

Table 2 is a table showing a relationship between the heat treatment temperature and the change (%) in sheet resistance when the thin film of Example 1 and the thin film of Comparative Example 1 are heat-treated. Fig. 10 is a graph showing the relationship between the heat treatment temperature and the sheet resistance of the thin films of Example 1 and Comparative Example 1. The sheet resistance after the heat treatment was calculated as a rate of change (%) and made dimensionless based on initial sheet resistance of individual samples by comparing the sheet resistance after the heat treatment with the initial sheet resistance.

[Table 2]

| | | Heat Treatment Temperature (°C) | | | | | | |
|---|---|---|---|---|---|---|---|---|
| | | 90 | 150 | 200 | 250 | 300 | 500 | 600 |
| Change in sheet resistance (%) | Example 1 Ag Alloy+SnO2 | 0.6 | 0.0 | -5.6 | -21.3 | -28.0 | -59.3 | -59.7 |
| | Comparative Example 1 Ag+Sn02 | 0.0 | 0.0 | -4.8 | -17.9 | -53.6 | -71.5 | -71.5 |

As shown in Table 2 and Fig. 10, in the thin film containing tin oxide $SnO_2$ as the main additive in Ag not substantially containing a solid solution element other than tin that is the main additive of Comparative Example 1, the sheet resistance began to decrease when the heat treatment temperature exceeds 200 °C, and the sheet resistance significantly changes at 300 °C and decreases to 53.6 % as compared to before the heat treatment. Subsequently, the sheet resistance decreased to 71.5 % as compared to before the heat treatment at the heat treatment temperature of 500 °C and did not change at higher heat treatment temperature. On the other hand, according to the thin film containing the Ag alloy in which the rare earth element is incorporated in solid solution and tin oxide $SnO_2$ as the main additive according to Example 1, although the sheet resistance began to decrease when the heat treatment temperature exceeds 200 °C in the same way, the change in sheet resistance at a heat treatment temperature of 300 °C is suppressed to 28.0 % as compared to before the heat treatment, the sheet resistance gradually decreased as the heat treatment temperature rises, and the sheet resistance decreased to 59.3% at a heat treatment temperature of 500 °C as compared to before the heat treatment and then became almost constant.

It can be seen that in the thin film containing the Ag alloy in which the rare earth element is incorporated in solid solution and tin oxide $SnO_2$ as the main additive according to Example 1, the coarsening of crystals and the change in sheet resistance due to heat treatment can be suppressed as compared to the thin film containing Ag not substantially containing a solid solution element and tin oxide $SnO_2$ as the main additive of Comparative Example 1.

The present disclosure includes appropriately combining any embodiments and/or examples out of the various embodiments and/or examples described above, and the effects of the respective embodiments and/or examples can be produced.

According to a contact material mainly composed of an Ag alloy according to the present invention, the Ag alloy contains a solid solution element having a vacancy binding energy lower than that of the constituent element of the main additive. Therefore, even when the contact material is used for the contact, the movement of the main additive such as tin oxide due to an arc etc. generated at the time of contact opening/closing can be suppressed, so that the contact material is useful as a material for electrical contacts.

EXPLANATIONS OF LETTERS OR NUMERALS

| | |
|---|---|
| 2, 2a, 2b | contact |
| 4 | ark |
| 12 | tin oxide (main additive) |
| 14 | Ag |
| 16 | aggregate |
| 22 | Sn atom |
| 23 | O atom |
| 24 | Ag atom |
| 26 | vacancy |

**Claims**

1. A contact material mainly composed of an Ag alloy, comprising:

   an Ag alloy; and
   at least one main additive existing as a phase different from the Ag alloy and selected from the group consisting of tin oxide, nickel, nickel oxide, iron, iron oxide, tungsten, tungsten carbide, tungsten oxide, zinc oxide, and carbon,
   wherein when a metal atom constituting the main additive or the main additive is carbon, the Ag alloy contains a solid solution element having a vacancy binding energy lower than a vacancy binding energy that is a binding energy between the metal atom included in the main additive and a vacancy in an Ag metal, or a binding energy between carbon included in the main additive of carbon and a vacancy in an Ag metal, in an amount of 0.01 wt.% or more.

2. The contact material mainly composed of an Ag alloy according to claim 1, wherein the main additive is tin oxide and is contained in an amount of 5 wt.% or more and 20 wt.% or less in terms of metal, and
   wherein the solid solution element is at least one selected from the group consisting of Be, C, P, K, Ca, Se, Rb, Sr, Sb, Te, Ba, La, Ce, Pr, Nd, Pm, Sm, Eu, Tl, Pb, and Bi, and is contained in an amount of 0.01 wt.% or more and 2 wt.%.

3. The contact material mainly composed of an Ag alloy according to claim 1, wherein in the case of nickel or nickel oxide, the main additive is contained in an amount of 5 wt.% or more and 20 wt.% or less in terms of metal, and
   wherein the solid solution element is at least one selected from the group consisting of Li, Be, C, Na, Mg, Al, Si, P, K, Ca, Cu, Zn, Ga, Ge, Se, Rb, Sr, Y, In, Sn, Sb, Te, Ba, La, Ce, Pr, Nd, Pm, Sm, Eu, Gd, Tb, Dy, Ho, Er, Tm, Yb, Lu, Tl, Pb, and Bi, and is contained in an amount of 0.01 wt.% or more and 2 wt.% or less.

4. The contact material mainly composed of an Ag alloy according to claim 1, wherein the main additive is iron or iron oxide and is contained in an amount of 5 wt.% or more and 20 wt.% or less in terms of metal, and
   wherein the solid solution element is at least one selected from the group consisting of Li, Be, C, Na, Mg, Al, Si, P, K, Ca, Sc, Ti, Co, Ni, Cu, Zn, Ga, Ge, Se, Rb, Sr, Y, Zr, Rh, Pd, In, Sn, Sb, Te, Ba, La, Ce, Pr, Nd, Pm, Sm, Eu, Gd, Tb, Dy, Ho, Er, Tm, Yb, Lu, Hf, Ir, Pt, Tl, Pb, and Bi, and is contained in an amount of 0.01 wt.% or more and 2 wt.% or less.

5. The contact material mainly composed of an Ag alloy according to claim 1, wherein the main additive is at least one selected from the group consisting of tungsten, tungsten carbide, and tungsten oxide, and is contained in an amount of 5 wt.% or more and 20 wt.% or less in terms of metal, and
   wherein the solid solution elements is at least one selected from the group consisting of Li, Be, C, Na, Mg, Al, Si, P, K, Ca, Sc, Ti, V, Cr, Mn, Fe, Co, Ni, Cu, Zn, Ga, Ge, Se, Rb, Sr, Y, Zr, Ru, Rh, Pd, In, Sn, Sb, Te, Ba, La, Ce, Pr, Nd, Pm, Sm, Eu, Gd, Tb, Dy, Ho, Er, Tm, Yb, Lu, Hf, Ta, Ir, Pt, Tl, Pb, and Bi, and is contained in an amount of 0.01 wt.% or more and 2 wt.% or less.

6. The contact material mainly composed of an Ag alloy according to claim 1, wherein

   the main additive is zinc oxide and is contained in an amount of 5 wt.% or more and 20 wt.% or less in terms of metal, and

wherein the solid solution elements is at least one selected from the group consisting of Be, C, Na, Si, P, K, Ca, Ga, Ge, Se, Rb, Sr, Y, In, Sn, Sb, Te, Ba, La, Ce, Pr, Nd, Pm, Sm, Eu, Gd, Tb, Dy, Yb, Tl, Pb, and Bi, and is contained in an amount of 0.01 wt.% or more and 2 wt.% or less.

7. The contact material mainly composed of an Ag alloy according to claim 1, wherein the main additive is carbon and is contained in an amount of 0.01 wt.% or more and 2 wt.% or less in terms of elements, and

wherein the solid solution element is selected from the group consisting of Be, K, Ca, Se, Rb, Sr, Sb, Te, Ba, La, Ce, Pr, Nd, Pm, Eu, Pb, and Bi, and is contained in an amount of 0.01 wt.% or more and 2 wt.% or less.

8. The contact material mainly composed of an Ag alloy according to any one of claims 2 to 4 and 6 to 7, wherein at least one selected from the group consisting of tungsten, tungsten carbide, tungsten oxide, and zirconia and existing as a phase different from the Ag alloy is further contained in an amount of 0.1 wt.% or more and 5 wt.% or less in terms of metal.

9. The contact material mainly composed of an Ag alloy according to any one of claims 1 to 7, wherein at least one of molybdenum oxide and tellurium dioxide existing as a phase different from the Ag alloy is further contained in an amount of 0.1 wt.% or more and 5 wt.% or less in terms of metal.

10. The contact material mainly composed of an Ag alloy according to any one of claims 1 to 7, wherein at least one of lithium oxide, lithium carbonate, and lithium cobalt oxide existing as a phase different from the Ag alloy is further contained in an amount of 0.01 wt.% or more and 1 wt.% or less in terms of metal.

11. The contact material mainly composed of an Ag alloy according to any one of claims 1 to 7, wherein at least one of copper oxide and copper existing as a phase different from the Ag alloy is further contained in an amount of 0.1 wt.% or more and 2 wt.% or less in terms of metal.

12. The contact material mainly composed of an Ag alloy according to any one of claims 2 and 4 to 7, wherein at least one of nickel oxide and nickel existing as a phase different from the Ag alloy is further contained in an amount of 0.1 wt.% or more and 2 wt.% or less in terms of metal.

13. The contact material mainly composed of an Ag alloy according to any one of claims 1 to 7, wherein indium oxide existing as a phase different from the Ag alloy is further contained in an amount of 0.1 wt.% or more and 5 wt.% or less in terms of metal.

14. The contact material mainly composed of an Ag alloy according to any one of claims 1 to 7, wherein bismuth oxide existing as a phase different from the Ag alloy is further contained in an amount of 0.1 wt.% or more and 5 wt.% or less in terms of metal.

15. The contact material mainly composed of an Ag alloy according to any one of claims 3 to 7, wherein tin oxide existing as a phase different from the Ag alloy is further contained in an amount of 0.1 wt.% or more and 5 wt.% or less in terms of metal.

16. The contact material mainly composed of an Ag alloy according to any one of claims 2 to 5 and 7, wherein at least zinc oxide existing as a phase different from the Ag alloy is further contained in an amount of 0.1 wt.% or more and 5 wt.% or less in terms of metal.

17. The contact material mainly composed of an Ag alloy according to any one of claims 2 to 6, wherein carbon existing as a phase different from the Ag alloy is further contained in an amount of 0.01 wt.% or more and 2 wt.% or less in terms of elements.

18. The contact material mainly composed of an Ag alloy according to claim 1, wherein at least one selected from the group consisting of tungsten, tungsten carbide, tungsten oxide, zirconia, molybdenum oxide, tellurium dioxide, lithium oxide, lithium carbonate, lithium cobalt oxide, copper oxide, copper, nickel oxide, nickel, indium oxide, bismuth oxide, tin oxide, zinc oxide, and carbon existing as a phase different from the Ag alloy is further contained.

19. A contact using the contact material mainly composed of an Ag alloy according to any one of claims 1 to 18.

20. An electrical device selected from a group consisting of relays, magnetic contactors, electromagnetic switches, electrical relays, and switches using the contact according to claim 19.

Fig. 1

EP 3 978 638 A1

VACANCY BINDING
ENERGY OF Sn
-0.202eV

Fig. 2A

Fig. 2B

Fig. 3A

Fig. 3B

Fig. 3C

Fig. 4A

Fig. 4B

Fig. 4C

Fig. 4D

Fig. 5A

Fig. 5B

Fig. 6A

Fig. 6B

Fig. 7A

Fig. 7B

Fig. 8A

Fig. 8B

Fig. 9A

Fig. 9B

Fig. 10

<div style="text-align:center">**INTERNATIONAL SEARCH REPORT**</div>

| International application No. |
| --- |
| PCT/JP2020/021427 |

**A. CLASSIFICATION OF SUBJECT MATTER**
C22C 5/06(2006.01)i; C22C 32/00(2006.01)i; C22C 1/04(2006.01)i
FI: C22C5/06 C; C22C32/00 A; C22C1/04 P; C22C1/04 E
According to International Patent Classification (IPC) or to both national classification and IPC

**B. FIELDS SEARCHED**

Minimum documentation searched (classification system followed by classification symbols)
C22C5/06; C22C32/00; C22C1/04

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 6-136472 A (CHUGAI ELECTRIC INDUSTRIAL CO., LTD.) 17.05.1994 (1994-05-17) paragraphs [0005]-[0011] | 1-2, 12-13, 18-20 |
| X | JP 2-57649 A (CHUGAI ELECTRIC INDUSTRIAL CO., LTD.) 27.02.1990 (1990-02-27) page 3, upper left column, line 6 to upper right column, line 20 | 1-2, 12-14, 18-20 |
| X | JP 2015-125936 A (TOKURIKI HONTEN CO., LTD.) 06.07.2015 (2015-07-06) paragraphs [0016]-[0018], tables 1-3 | 1, 5, 17-20 |
| X | JP 3-215638 A (TOKURIKI HONTEN CO., LTD.) 20.09.1991 (1991-09-20) page 2, lower left column, line 8 to page 3, lower left column, line 1, attached table | 1-2, 9, 11, 13, 18-20 |
| X | JP 2015-125935 A (TOKURIKI HONTEN CO., LTD.) 06.07.2015 (2015-07-06) paragraphs [0005]-[0015], table 1 | 1, 18-20 |

☒ Further documents are listed in the continuation of Box C.  ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 13 August 2020 (13.08.2020) | 01 September 2020 (01.09.2020) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2020/021427

C (Continuation). DOCUMENTS CONSIDERED TO BE RELEVANT

| Category* | Citation of document, with indication, where appropriate, of the relevant passages | Relevant to claim No. |
|---|---|---|
| X | CN 108411135 A (NORTHEASTERN UNIVERSITY) 17.08.2018 (2018-08-17) paragraphs [0023]-[0172] | 1, 3, 19-20 |
| X | KR 10-2011-0054625 A (HEE SUNG METAL LTD.) 25.05.2011 (2011-05-25) paragraphs [0029]-[0036] | 1, 6, 11, 18-20 |
| A | JP 9-171735 A (DEGUSSA AG) 30.06.1997 (1997-06-30) | 1-20 |

Form PCT/ISA/210 (continuation of second sheet) (January 2015)

**INTERNATIONAL SEARCH REPORT**
Information on patent family members

| International application No. |
|---|
| PCT/JP2020/021427 |

| Patent Documents referred in the Report | Publication Date | Patent Family | Publication Date |
|---|---|---|---|
| JP 6-136472 A | 17 May 1994 | (Family: none) | |
| JP 2-57649 A | 27 Feb. 1990 | (Family: none) | |
| JP 2015-125936 A | 06 Jul. 2015 | (Family: none) | |
| JP 3-215638 A | 20 Sep. 1991 | (Family: none) | |
| JP 2015-125935 A | 06 Jul. 2015 | (Family: none) | |
| CN 108411135 A | 17 Aug. 2018 | (Family: none) | |
| KR 10-2011-0054625 A | 25 May 2011 | (Family: none) | |
| JP 9-171735 A | 30 Jun. 1997 | US 5841044 A EP 774529 A1 DE 19543222 C1 ES 2146825 T3 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 53149667 A

**Non-patent literature cited in the description**

- **CHUN YU et al.** First principles calculation of the effects of solute atom on electromigration resistance of Al interconnects. *J. Physics D:Appl. Phys.,* 2009, vol. 42, 125501